# EUROPEAN PATENT SPECIFICATION

(11) **EP 2 548 919 B1**
(45) Date of publication and mention of the grant of the patent: **27.04.2016**
(21) Application number: 11756278.5
(22) Date of filing: 15.03.2011
(51) Int. Cl.: C08L 9/02, B32B 1/08, B32B 25/14, C08K 3/00, C08K 5/053, C08K 5/06, C08K 5/548, F16L 11/06

(54) **NITRILE COPOLYMER RUBBER COMPOSITION FOR HOSE AND CROSSLINKED MATERIAL**
NITRILKAUTSCHUKPOLYMERZUSAMMENSETZUNG FÜR SCHLÄUCHE UND VERNETZTES MATERIAL
COMPOSITION DE CAOUTCHOUC COPOLYMÈRE NITRILE POUR TUYAU ET MATÉRIAUX RÉTICULÉS

(30) Priority: 17.03.2010 JP 2010060826
(43) Date of publication of application: 23.01.2013
(73) Proprietor: Zeon Corporation, Tokyo 100-8246 (JP)
(72) Inventor: TSUKADA, Akira, Tokyo 100-8246 (JP)
(74) Representative: Beckmann, Claus
(86) International application number: PCT/JP2011/056010
(87) International publication number: WO 2011/115093

(56) References cited:
- EP-A1- 2 246 389
- WO-A1-2006/003973
- WO-A1-2009/096456
- WO-A1-2009/096456
- JP-A- 5 017 627
- JP-A- 2008 074 926
- JP-A- 2008 520 818
- JP-A- 2009 235 304
- DATABASE WPI Week 198338 Thomson Scientific, London, GB; AN 1983-770201 XP002699975, & SU 975 735 A (BUKALOV V P) 23 November 1982 (1982-11-23)

## Description

### TECHNICAL FIELD

The present invention relates to a nitrile copolymer rubber composition for hose use which can give a rubber cross-linked product for hose use which is excellent in gasoline permeation resistance, cold resistance, sour gasoline resistance, and solvent crack resistance.

### BACKGROUND ART

Conventionally, rubber which contains α,β-ethylenically unsaturated nitrile monomer units and conjugated diene monomer units or olefin monomer units (nitrile copolymer rubber) has been known as rubber which is excellent in oil resistance. The cross-linked product of the same has been used mainly as materials for fuel hoses and other rubber products around oils in automotive applications.

On the other hand, in recent years, due to rising global activities to protect the environment, efforts are being made to reduce the amount of evaporation of gasoline and other fuel into the atmosphere. In Japan as well, in applications for fuel hoses, much lower gasoline permeability is being sought. Further, fuel hoses are being required to exhibit resistance to free radicals generated in sour gasoline (sour gasoline resistance). However, the fuel hoses which are obtained by cross-linking conventional compositions of nitrile copolymer rubber are inferior in gasoline permeation resistance and sour gasoline resistance. Therefore, these demands have not been able to be met.

In view of this situation, in Patent Document 1, as a nitrile copolymer rubber composition which gives a cross-linked product (hose) of nitrile copolymer rubber which is excellent in gasoline permeability and sour gasoline resistance, a nitrile copolymer rubber composition containing a nitrile copolymer rubber which has α,β-ethylenically unsaturated nitrile monomer units 10 to 75 wt%, conjugated diene monomer units 5 to 89.9 wt%, and cationic monomer units and/or monomer units able to form cations 0.1 to 20 wt%, an inorganic filler with an aspect ratio of 30 to 2,000 and a coupling agent have been proposed. According to the Patent Document 1, it is possible to obtain a cross-linked product (hose) of nitrile copolymer rubber which is excellent in gasoline permeation resistance and sour gasoline resistance, but further improvement of the solvent crack resistance has been desired.

### PRIOR ART DOCUMENTS

### PATENT DOCUMENTS

Patent Document 1: Japanese Patent Publication No. 2009-179687 (Specification of U.S. Patent Application Publication No. 2010/0330319)

### DISCLOSURE OF THE INVENTION

### PROBLEM TO BE SOLVED BY THE INVENTION

The present invention was made in consideration of such an actual situation and has as its object the provision of a nitrile copolymer rubber composition for hose use which can give a rubber cross-linked product for hose use which is excellent in gasoline permeation resistance, cold resistance, sour gasoline resistance, and solvent crack resistance.

### MEANS FOR SALVING THE PROBLEMS

The inventors engaged in intensive research to achieve the above object and as a result discovered that a nitrile copolymer rubber composition which is obtained by adding to a nitrile copolymer rubber which has a predetermined amount of α,β-ethylenically unsaturated nitrile monomer units, an inorganic filler which has a predetermined aspect ratio, a predetermined amount of coupling agent, and a predetermined amount of glycol compound can achieve the above object and thereby competed the present invention.

That is, according to the present invention, there is provided a nitrile copolymer rubber composition for hose use containing a nitrile copolymer rubber (A) which has α,β-ethylenically unsaturated nitrile monomer units 20 to 80 wt%, an inorganic filler (B) with an aspect ratio of 30 to 2,000, a coupling agent (C), and a glycol compound (D), wherein a ratio of the coupling agent (C) is 0.05 to 15 parts by weight and a ratio of the glycol compound (D) is 0.05 to 15 parts by weight with respect to 100 parts by weight of the nitrile copolymer rubber (A).

Further, the glycol compound (D) is preferably expressed by the following general formula (1).

HO-(CH₂CH₂O)ₙ-H ... (1)

(wherein the general formula (1), n is 1 to 3000.)

Preferably, the glycol compound (D) is at least one type of compound which is selected from ethyleneglycol, diethyleneglycol, and C₈ or more polyethyleneglycol.

Preferably, the nitrile copolymer rubber (A) further has cationic monomer units and/or monomer units able to form cations, and a ratio of content the cationic monomer units and/or monomer units able to form cations in the nitrile copolymer rubber (A) is 0.1 to 30 wt%.

Preferably, the nitrile copolymer rubber composition for hose use of the present invention further contains a plasticizer.

Preferably, the nitrile copolymer rubber (A) is hydrogenated nitrile copolymer rubber where at least part of the carbon-carbon unsaturated bond parts is hydrogenated.

Preferably, the nitrile copolymer rubber composition for hose use of the present invention further contains 10 to 150 parts by weight of vinyl chloride resin and/or acryl resin with respect to 100 parts by weight of the nitrile copolymer rubber (A).

According to the present invention, there is provided a cross-linkable nitrile copolymer rubber composition for hose use containing the above nitrile copolymer rubber composition for hose use and a cross-linking agent.

According to the present invention, there is provided a rubber cross-linked product for hose use obtained by cross-linking the above cross-linkable nitrile copolymer rubber composition for hose use.

Further, according to the present invention, there is provided a laminate for hose use comprised of two or more layers wherein at least one layer of which is comprised of the above rubber cross-linked product for hose use.

Further, according to the present invention, there is provided a hose obtained by shaping the above cross-linkable nitrile copolymer rubber composition for hose use into a tube shape, inserting a mandrel, and cross-linking the obtained shaped article. The hose of the present invention is preferably obtained by shaping a laminate of two or more layers including a layer comprised of the above cross-linkable nitrile copolymer rubber composition for hose use into a tube shape, inserting a mandrel, and cross-linking the obtained shaped article.

### EFFECTS OF THE INVENTION

According to the present invention, there are provided a nitrile copolymer rubber composition for hose use which gives a rubber cross-linked product for hose use which is excellent in gasoline permeation resistance, cold resistance, sour gasoline resistance, and solvent crack resistance and a rubber cross-linked product for hose use which is obtained by cross-linking that composition and is provided with the above properties.

### DESCRIPTION OF EMBODIMENTS

### Nitrile Copolymer Rubber Composition for Hose Use

The nitrile copolymer rubber composition for hose use of the present invention is a composition of a nitrile copolymer rubber which contains a nitrile copolymer rubber (A) which has α,β-ethylenically unsaturated nitrile monomer units 20 to 80 wt%, an inorganic filler (B) with an aspect ratio of 30 to 2,000, a coupling agent (C), and a glycol compound (D), wherein a ratio of the coupling agent (C) is 0.05 to 15 parts by weight and a ratio of the glycol compound (D) is 0.05 to 15 parts by weight with respect to 100 parts by weight of the nitrile copolymer rubber (A).

First, the nitrile copolymer, rubber (A) which is used in the present invention will be explained.

The nitrile copolymer rubber (A) is a rubber which has at least α,β-ethylenically unsaturated nitrile monomer units in 20 to 80 wt%.

The ratio of content of α,β-ethylenically unsaturated nitrile monomer units is, with respect to the total monomer units, 20 to 80 wt%, preferably 30 to 70 wt%, particularly preferably 40 to 65 wt%. If the ratio of content of α,β-ethylenically unsaturated nitrile monomer units is too low, the obtained rubber cross-linked product for hose use deteriorates in gasoline permeation resistance and oil resistance. On the other hand, if the ratio of content is too high, the obtained rubber cross-linked product for hose use is inferior in cold resistance and the embrittlement temperature becomes higher.

The α,β-ethylenically unsaturated nitrile monomer forming the α,β-ethylenically unsaturated nitrile monomer units is not particularly limited so long as being an α,β-ethylenically unsaturated compound which has nitrile groups, but, for example, acrylonitrile; α-chloroacrylonitrile, α-bromoacrylonitrile, or other α-halogenoacrylonitriles; methacrylonitrile or other α-alkylacrylonitriles; etc. may be mentioned. Among these, acrylonitrile and methacrylonitrile are preferable. These may be used as single types alone or as a plurality of types combined.

Further, the nitrile copolymer rubber (A) which is used in the present invention preferably further has, in addition to the α,β-ethylenically unsaturated nitrile monomer units, cationic monomer units and/or monomer units able to form cations.

The ratio of content of cationic monomer units and/or monomer units able to form cations is, with respect to the total monomer units, 0 to 30 wt%, preferably 0.1 to 30 wt%, more preferably 0.3 to 10 wt%. By including the cationic monomer units and/or monomer units able to form cations, the obtained rubber cross-linked product for hose use becomes further excellent in gasoline permeation resistance.

The monomer which forms the cationic monomer units and/or monomer units able to form cations is not particularly limited so long as a monomer which forms monomer units which becomes charged plus when the obtained polymer contacts water or an acid aqueous solution. As such a monomer, for example, as a cationic monomer, a monomer which contains a quaternary ammonium base may be mentioned. Further, as a monomer able to form cations, a monomer which has a precursor part (substituent) such as a tertiary amine group which is cationated to an ammonium salt (for example, amine hydrochloride or amine sulfate) when contacting hydrochloric acid, sulfuric acid or another acid aqueous solution may be mentioned.

As specific examples of cationic monomers, a (meth)acryloyloxytrimethyl ammonium chloride [meaning acryloyloxytrimethyl ammonium chloride and/or methacryloyloxytrimethyl ammonium chloride, same below], (meth)acryloyloxyhydroxypropyltrimethyl ammonium chloride, (meth) acryloyloxytriethyl ammonium chloride, (meth) acryloyloxydimethylbenzyl ammonium chloride, (meth)acryloyloxytrimethyl ammonium methylsulfate, or other (meth) acrylic ester monomer which contains a quaternary ammoniun base; (meth) acrylamidopropyltrimethyl ammonium chloride, (meth)acrylamidopropyldimethylbenzyl ammonium chloride, or other (meth)acrylamide monomer which contains a quaternary ammonium base; etc. may be mentioned.

As specific examples of monomer able to form cations, 2-vinylpyridine, 4-vinylpyridine, or other cyclic amine monomer which contains a vinyl group; dimethylaminoethyl (meth)acrylate or other (meth) acrylate ester monomer which contains a tertiary amino group; (meth)acrylamide dimethylaminoethyl, N,N-dimethylaminopropyl acrylamide, or other (meth) acrylamide monomer which contains a tertiary amino group; N-(4-anilinophenyl)acrylamide, N-(4-anilinophenyl)methacrylamide, N- (4-anilinophenyl)cinnamide, N-(4-anilinophenyl)crotonamide, N-phenyl-4-(3-vinylbenzyloxy)aniline, N-phenyl-4-(4-vinylbenzyloxy)aniline etc. may be mentioned.

These may be used as single types alone or as a plurality of types combined.

Among the cationic monomers and monomers able to form cations, since the effect of the present invention becomes much more remarkable, a cyclic amine monomer which contains a vinyl group, a (meth)acrylic ester monomer which contains a tertiary amino group, and a (meth)acrylamide monomer which contains a tertiary amino group are preferable, a cyclic amine monomer which contains a vinyl group and an acrylamide monomer which contains a tertiary amino group are more preferable, and a cyclic amine monomer which contains a vinyl group is particularly preferable.

Note that, as a vinyl group-containing cyclic amine monomer, vinyl group-containing pyridines are preferable, while 2-vinylpyridine is particularly preferable.

Further, the nitrile copolymer rubber (A) which is used in the present invention preferably contains conjugated diene monomer units so as to make tthe obtained rubber cross-linked product for hose use have rubber elasticity.

As the conjugated diene monomer which forms the conjugated diene monomer units, a C₄ or higher conjugated diene is preferable. For example, 1,3-butadiene, isoprene, 2,3-dimethyl-1,3-butadiene, 1,3-pentadiene, etc. may be mentioned. Among these, 1,3-butadiene is preferable. These may be used as single types alone or as a plurality of types combined.

The ratio of content of the conjugated diene monomer units in the nitrile copolymer rubber (A) is, with respect to the total monomer units, preferably 20 to 80 wt%, more preferably 29.9 to 69.9 wt%, particularly preferably 34.7 to 59.7 wt%. If the ratio of content of the conjugated diene monomer units is too low, the obtained rubber cross-linked product for hose use is liable to fall in rubber elasticity. On the other hand, if too great, the obtained rubber cross-linked product for hose use may deteriorate in gasoline permeation resistance.

Further, the nitrile copolymer rubber (A) which is used in the present invention may contain, in addition to the above α,β-ethylenically unsaturated nitrile monomer units, cationic monomer units and/or monomer units able to form cations, and conjugated diene monomer units, units of other monomers which can copolymerize with the monomer which forms these monomer units. The ratio of content of the other monomer units is, with respect to the total monomer units, preferably 30 wt% or less, more preferably 20 wt% or less, furthermore preferably 10 wt% or less.

As such other copolymerizable monomers, for example, styrene, α-methylstyrene, vinyltoluene, and other aromatic vinyl compounds; fluoroethyl vinyl ethers, fluoropropyl vinyl ethers, o-trifluoromethylstyrene, vinyl pentafluorobenzoate, difluoroethylene, tetrafluoroethylene, and other fluorine-containing vinyl compounds; 1,4-pentadiene, 1,4-hexadiene, vinyl norbornene, dicyclopentadiene, and other nonconjugated diene conpounds; ethylene; propylene, 1-butene, 4-methyl-1-pentene, 1-hexene, 1-octene, and other α-olefin compounds; acrylic acid, methacrylic acid, maleic acid, anhydrous maleic acid, itaconic acid, anhydrous itaconic acid, fumaric acid, anhydrous fumaric acid, and other α,β-ethylenically unsaturated carboxylic acids and their anhydrides; methyl (meth)acrylate, ethyl (meth)acrylate, butyl (meth)acrylate, 2-ethylhexyl (meth)acrylate, and other α,β-ethylenically unsaturated monocarboxylic acid alkyl esters; monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, dibutyl itaconate, and other monoesters and diesters of α,β-ethylenically unsaturated polyvalent carboxylic acids; methoxyethyl (meth)acrylate, methoxypropyl (meth)acrylate, butoxyethyl (meth)acrylate, and other alkoxyalkyl esters of α,β-ethylenically unsaturated carboxylic acids; 2-hydroxyethyl (meth)acrylate, 3-hydroxypropyl (meth)acrylate, and other hydroxyalkyl esters of α,β-ethylenically unsaturated carboxylic acids; divinylbenzene and other divinyl compounds; ethylene di(meth) acrylate, diethyleneglycol di(meth)acrylate, ethyleneglycol di(meth)acrylate, and other di(meth)acrylic acid esters; trimethylolpropane tri(meth)acrylate, and other trimethacrylic acid esters; and other polyfunctional ethylenic unsaturated monomers and also N-methylol (meth)acrylamide, N,N'-dimethylol(meth)acrylamide, and other self cross-linkable compounds; etc. may be mentioned.

The Money viscosity of the nitrile copolymer rubber (A) (below, sometimes called the "polymer Mooney viscosity") (ML₁₊₄, 100°C) is preferably 3 to 250, more preferably 15 to 180, furhtermore preferably 20 to 160. If the polymer Mooney viscosity of the nitrile copolymer rubber (A) is too low, the obtained rubber cross-linked product for hose use is liable to drop in strength characteristics. On the other hand, if too high, the processability may deteriorate.

The nitrile copolymer rubber (A) which is used in the present invention, can be produced by copolymerizing the above monomers which form the nitrile copolymer rubber (A). The method for copolymerizing the monomers is not particularly limited, but, for example, the emulsion polymerization method which uses sodium dodecylbenzene sulfonate or other emulsifier to obtain a latex of a copolymer which has an average particle size of about 50 to 1,000 nm, the suspension polymerization method (including also microsuspension polymerization method as well) which uses polyvinyl alcohol or other dispersant to obtain an aqueous dispersion of a copolymer which has an average particle size of about 0.2 to 200 µm, etc. may be suitably used. Among these, due to the ease of control of the polymerization reaction, the emulsion polymerization method is more preferable.

The emulsion polymerization method is preferably performed by the following procedure.

Note that, below, suitably, the α,β-ethylenically unsaturated nitrile monomer is referred to as the "monomer (m1)", the conjugated diene monomer is referred to as the "monomer (m2)", and the cationic monomer and/or monomer able to form cations is referred to as the "monomer (m3)".

That is, the method of polymerizing a monomer mixture comprised of the monomer (m1) in 20 to 80 wt%, preferably 30 to 70 wt%, more preferably 40 to 65 wt%, the monomer (m2) in 20 to 80 wt%, preferably 29.9 to 69.9 wt%, more preferably 34.7 to 59.7 wt%, and the monomer (m3) in 0 to 30 wt%, preferably 0.1 to 30 wt%, more preferably 0.3 to 10 wt% (however, total of the monomer (m1), monomer (m2), and monomer (m3) being 100 wt%) by emulsion polymerization, stopping the polymerization reaction when the polymerization conversion rate is preferably 50 to 95 wt%, then if desired removing the unreacted monomers is preferable.

If the amount of use of the monomer (m1) which is used for the emulsion polymerization method is too small, the obtained rubber cross-linked product for hose use deteriorates in oil resistance and gasoline permeation resistance, while if too large, the cold resistance tends to deteriorate. If the amount of use of the monomer (m2) is too small, the reaction is deactivated at the initial stage of polymerization, while if too large, the obtained rubber cross-linked product for hose use tends to deteriorate in gasoline permeation resistance. Further, by using the monomer (m3) in the above range, the obtained rubber cross-linked product for hose use can be further improved in gasoline permeation resistance.

Note that, if the polymerization conversion rate at which the polymerization reaction is stopped is too low, recovery of the unreacted monomer becomes extremely difficult. On the other hand, if too high, the obtained rubber cross-linked product for hose use deteriorates in strength characteristics.

Further, at the time of emulsion polymerization, it is possible to suitably use an emulsifier, polymerization initiator, polymerization secondary material, etc. conventionally known in the field of emulsion polymerization. The polymerization, temperature and the polymerization time may also be suitably adjusted.

In the present invention, it is also possible to use the entire amount of the monomers (m1) to (m3) which are used for the emulsion polymerization so as to start the polymerization reaction, but from the viewpoint of controlling the distribution of composition of the monomer units of the copolymer produced and obtaining a rubber cross-linked product for hose use richer in rubbery elasticity, it is preferable to use part of the entire amount of the monomers (m1) to (m3) which are used for the emulsion polymerization to start the polymerization reaction, then add the remains of the monomers (m1) to (m3) which are used for the emulsion polymerization to the reactor for polymerization. This is because in general, if ending up using the entire amount of the monomers (m1) to (m3) which are used for the emulsion polymerization from the start of the polymerization reaction, the distribution of composition of the copolymer will become broader.

In this case, it is preferable to charge into the reactor a monomer mixture comprised of preferably 10 to 100 wt%, more preferably 20 to 100 wt%, particularly preferably 30 to 100 wt% of the monomer (m1) which is used for the polymerization, preferably 5 to 90 wt%, more preferably 10 to 80 wt%, particularly preferably 15 to 70 wt% of the monomer (m2) which is used for the polymerization, and preferably 0 to 100 wt%, more preferably 30 to 100 wt%, particularly preferably 70 to 100 wt% of the monomer (m3) which is used for the polymerization, start the polymerization reaction, then, when the polymerization conversion rate of the monomer mixture which is charged into the reactor is preferably 5 to 80 wt% in range, adding the remains of the monomers to the reactor to continue the polymerization, reaction. Note that, for example, even if not using the monomer (m3), it is preferable to use the above-mentioned amounts of the monomer (m1) and monomer (m2) which are used for the polymerization, start the polymerization reaction, then add the remains of the monomers (m1) and (m2) to the reactor for polymerization.

The method of adding the remaining monomers is not particularly limited. They may be added all together or may be added in batches. Further, they may be added continuously. In the present invention, from the viewpoint of the ability to more simply control the obtained copolymer, in distribution of composition, the remaining monomers is preferably added in batches. Addition in one to six batches is particularly preferable. If adding the remaining monomers in batches, the amounts of monomers added in batches and the timings of addition of the batches may be adjusted in accordance with the progress in the polymerization reaction so as to obtain the desired copolymer.

Further, after this, if desired, heat distillation, vacuum distillation, steam distillation, or another known method is used to remove the unreacted monomers to obtain the latex of the nitrile copolymer, rubber (A).

In the present invention, the latex of the nitrile copolymer rubber (A) which is obtained by the emulsion polymerization method has a solid content concentration of preferably 5 to 70 wt%, more preferably 10 to 60 wt%.

Note that, the nitrile copolymer rubber (A) which is used in the present invention may be a hydrogenated nitrile copolymer rubber comprised of the copolymer, obtained by copolymerization in the above way wherein at least part of the carbon-carbon unsaturated bond parts in the conjugated diene monomer unit parts is hydrogenated (hydrogenation reaction). The hydrogenation method is not particularly limited. A known method may be employed. When making the nitrile copolymer rubber (A) a hydrogenated nitrile copolymer rubber, the iodine value is preferably 0 to 120 in range, more preferably 4 to 60 in range. By hydrogenating the nitrile copolymer rubber (A) to obtain a hydrogenated nitrile copolymer rubber, it is possible to improve the heat resistance, weather resistance, ozone resistance, etc.

The inorganic filler (B) is a flat-shaped filler with an aspect ratio of 30 to 2,000. The aspect ratio is preferably 35 to 1,500, more preferably 40 to 1,000, particularly preferably 45 to 800. By using such a flat-shaped inorganic filler (B), it is possible to give the obtained rubber cross-linked product for hose use the effect of blocking the permeation of gasoline. Further, among flat shaped inorganic fillers as well, by using an inorganic filler with an aspect ratio in the above range and combining this with the above nitrile copolymer rubber (A), the obtained rubber cross-linked product for hose use can be made good in gasoline permeation resistance and sour gasoline resistance while obtaining an excellent cold resistance. If the aspect ratio is too small, the obtained rubber cross-linked product for hose use ends up deteriorating in gasoline permeation resistance. On the other hand, if too large, dispersion into the nitrile copolymer rubber (A) becomes difficult and the strength characteristics end up falling.

Note that, in the present invention, the aspect ratio of the inorganic filler (B) can be calculated by finding the ratio of the planar average diameter and average thickness of primary particles of the inorganic filler (B). Here, the planar average diameter and the average thickness are number average values which are obtained by measuring the diameter in the planar direction and thickness of 100 particles of inorganic filler (B) which are randomly selected by an atomic force microscope and calculating the arithmetic average values.

The inorganic filler (B) with an aspect ratio of 30 to 2,000 is not particularly limited. It may be one derived from a natural material, may be a natural material which is refined or otherwise treated, or may be a synthetic material. As specific examples, kaolinite, halloysite, and other kaolinites; montmorillonite, beidelite, nontronite, saponite, hectorite, stevensite, mica and other smectites; and vermiculites; chlorites; talc; E glass or C glass or other glass flakes which are amorphous plate-shaped particles etc. may be mentioned. Among these, smectite is preferable, while montmorillonite, mica, and saponite are particularly preferred. These may be used as single types alone or as a plurality of types combined. In particular, in the present invention, it is preferable to treat the montmorillonite, mica, and saponite by an aqueous dispersion, separate the layers forming the multilayer structured compounds of montmorillonite, mica, and saponite, and use what is obtained. By performing such aqueous dispersion treatment, it is possible to obtain a composition with a good dispersibility. Here, among the above, montmorillonite used as the inorganic filler (B) is contained, as the main ingredient in bentonite. Therefore, as the montmorillonite, it is possible to use one obtained by refining bentonite.

Note that, montmorillonite, mica, and saponite are multilayer structures which have exchangeable positive ions between the layers, so are excellent in dispersion ability into the nitrile copolymer, rubber (A) which has cationic monomer units and/or monomer units able to form cations and therefore can be preferably used. In particular, by raising the dispersion ability of the inorganic filler (B) with respect to the nitrile copolymer rubber (A), the obtained rubber cross-linked product for hose use can be made further smaller in gasoline permeability and can be made further lower in embrittlement temperature. Note that, when including in the nitrile copolymer rubber (A) cationic monomer units and/or monomer units able to form cations, the ratio of the inorganic filler (B) and the cationic monomer units and/or monomer units able to form cations is preferably, by weight ratio, "inorganic filler (B) :cationic monomer units and/or monomer units able to form cations"=1:0.0005 to 1:30, more preferably 1:0.003 to 1:5. If the ratio is outside of the above range, sometimes the above effect becomes hard to obtain.

The average particle size of the inorganic filler (B) (average primary particle size) is preferably 0.001 to 20 µm, more preferably 0.005 to 15 µm, furthermore preferably 0.01 to 10 µm. In the present invention, the average particle size of the inorganic filler (B) is defined by the 50% volume cumulative diameter which is found by the X-ray transmission method. If the particle size of the inorganic filler (B) becomes too small, the obtained rubber cross-linked product for hose use is liable to fall in elongation, while conversely if too large, there is a possibility that a stable latex composition cannot be prepared.

The content of the inorganic filler (B) is, with respect to 100 parts by weight of the nitrile copolymer rubber (A), preferably 1 to 200 parts by weight, more preferably 2 to 150 parts by weight, furthermore preferably 3 to 120 parts by weight, particularly preferably 3 to 60 parts by weight. If the amount of use of the inorganic filler (B) is too small, the obtained rubber cross-linked product for hose use is liable to fall in gasoline permeation resistance or to become insufficient in sour gasoline resistance. On the other hand, if the amount used is too great, the elongation is liable to fall.

The nitrile copolymer rubber composition for hose use of the present invention contains, in addition to the above nitrile copolymer rubber (A) and inorganic filler (B), the coupling agent (C) in a predetermined amount.

Here, the coupling agent (C) means an agent which has functional groups which bond with hydroxyl groups (-OH) of the surface of the inorganic filler (B).

By including the coupling agent (C), it is possible to further improve the dispersion ability of the nitrile copolymer, rubber (A) and the inorganic filler (B) and possible to improve the cold resistance in the case of a rubber cross-linked product for hose use. Note that, the coupling agent (C) is not particularly limited, but the effect of the present invention becomes much more remarkable, so a titanate-based coupling agent and silane coupling agent are preferable, a silane coupling agent is more preferable, and, among silane coupling agents, ones which do not contain sulfur atoms are particularly preferable.

Further, as the coupling agent (C) which is used in the present invention, one of a molecular weight of 400 or less is preferable, while one of 300 or less is more preferable. If using one with a molecular weight which is too large, sometimes the effect of addition of the coupling agent, that is, the effect of improvement of the cold resistance, can no longer be obtained.

As specific examples of the coupling agent (C), for example, bis(3-(triethoxysilyl)propyl)disulfide, bis(3-(triethoxysilyl)propyl)tetrasulfide, and other sulfide group-containing silane coupling agent; γ-mercaptopropyl trimethoxysilane, γ-mercaptomethyl trimethoxysilane, γ-mercaptomethyl triethoxysilane, γ-mercaptohexamethyl disilazane, or other mercapto group-containing silane coupling agent; γ-glycidoxypropyl trimethoxysilane, γ-glycidoxypropyl methyldimethoxysilane, β-(3,4-epoxycyclohexyl)ethyl trimethoxysilane, γ-glycidoxypropylmethyl diethoxysilane, or other epoxy group-containing silane coupling agent; N-(β-aminoethyl)-γ-aminopropyl trimethoxysilane, γ-aminopropyl trimethoxysilane, γ-aminopropyl triethoxysilane, N-2-(aminoethyl)-3-aminopropyl trimethoxysilane, N-2-(aminoethyl)-3-aminopropyl triethoxysilane, 3-triethoxysilyl-N-(1,3-dimethylbutylidene)propylamine, N-phenyl-3-aminopropyl trimethoxysilane, or other amino group-containing silane coupling agent; γ-methacryloxypropyl trimethoxysilane, γ-methacryloxypropyl tris(β-methoxyethoxy) silane, γ-methacryloxypropylmethyl dimethoxysilane, γ-methacryloxypropylmethyl diethoxysilane, γ-methacryloxypropyl triethoxysilane, γ-acryloxypropyl trimethoxysilane, or other (meth)acryloxy group-containing silane coupling agent; vinyl trimethoxysilane, vinyl triethoxysilane, vinyl tris(β-methoxyethoxy)silan, vinyl trichlorosilane, vinyl triacetoxysilane, or other vinyl group-containing silane coupling agent; 3-chloropropyl trimethoxysilane, or other chloropropyl group-containing silane coupling agent; 3-isocyanatepropyl triethoxysilane or other isocyanate group-containing silane coupling agent; p-styryl trimethoxysilane or other styryl group-containing silane coupling agent; 3-ureidapropyl triethoxysilane or other ureido group-containing silane coupling agent; diallyl dimethylsilane or other allyl group-containing silane coupling agent; tetraethoxysilane or other alkoxy group-containing silane coupling agent; diphenyldimethoxysilane or other phenyl group-containing silane coupling agent; trifluoropropyl trimethoxysilane or other fluoro group-containing silane coupling agent; isobutyl trimethoxysilane, cyclohexylmethyl dimethoxysilane, or other alkyl group-containing silane coupling agent; acetoalkoxyaluminum diisopropylate or other aluminum-based coupling agent; isopropyl triisostearoyl titanate, isopropyl tris(dioctyl pyrophosphate) titanate, isopropyl tri(N-aminoethyl-aminoethyl) titanate, tetraoctyl bis(ditridecylphosphite) titanate, tetra(2,2-diallyloxymethyl-1-butyl) bis(ditridecyl)phosphite titanate, bis(dioctyl pyrophosphate)oxyacetate titanate, bis(dioctyl pyrophosphate)ethylene titanate, tetraisopropyl bis(dioctylphosphite) titanate, isopropyltriisostearoyl titanate, or other titanate-based coupling agent; etc. may be mentioned, but the effect of the present invention becomes much more remarkable, so an epoxy group-containing silane coupling agent is preferable, while β-(3,4-epoxycyclohexyl)ethyl trimethoxysilane is particularly preferred. These may be used as single types alone or as a plurality of types combined.

The content of the coupling agent (C) is, with respect to 100 parts by weight of the nitrile copolymer rubber (A), 0.05 to 15 parts by weight, preferably 0.1 to 10 parts by weight, more preferably 0.2 to 5 parts by weight. If the content of the coupling agent (C) is too small, the effect of improvement of the cold resistance can no longer be obtained. On the other hand, if too large, the gasoline permeation resistance and solvent crack resistance are liable to drop.

Further, the nitrile copolymer rubber composition for hose use of the present invention contains, in addition to the above nitrile copolymer rubber (A), inorganic filler (B), and coupling agent (C), the glycol compound (D) in a predetermined amount. In particular, in the present invention, by combining the glycol compound (D) with the coupling agent (C), when cross-linking the nitrile copolymer rubber composition for hose use of the present invention to obtain a rubber cross-linked product for hose use, the obtained rubber cross-linked product for hose use can hold a good gasoline permeation resistance, cold resistance, and sour gasoline resistance while being made excellent in solvent crack resistance.

Here, the glycol compound (D) is a compound which has two or more hydroxyl groups in the molecule and has the number of carbon atoms of 2 to 6,000, preferably 2 to 2,000, particularly preferably 2 to 400.

Further, as specific examples of the glycol compound (D), ethyleneglycol, diethyleneglycol, triethyleneglycol, C₈ or more polyethyleneglycol, propyleneglycol, polypropyleneglycol, butyleneglycol, polybutyleneglycol, polyoxyethylene-polyoxypropyleneglycol, polyoxytetramethylene-polyoxyethyleneglycol, polyoxytetramethylene-polyoxypropyleneglycol, polyethyleneglycol-polypropyleneglycol-polyethyleneglycol block polymers and other polyoxyalkyleneglycols; polyoxyethylene-bisphenol A ether, polyoxypropylene-bisphenol A ether, polyoxyethylene-polyoxypropylene-bisphenol A ether, and other bisphenol A derivatives; polyglycerin, polyoxyethyleneglycerin, polyoxypropyleneglyceryl ether, polyoxyethylene-polyoxypropyleneglyceryl ether, polyoxyethylene-polyoxypropylenetrimethylolpropane, polyoxypropylene-diglyceryl ether, polyoxyethylene-polyoxypropylenepentaerythritol ether, polyoxypropylene-sorbit, or other multi-chain type polyoxyalkyleneglycol; polyoxyethylenemethyl glucoside, polyoxypropylenemethylglucoside, or other multi-chain type polyoxyalkylenealkyl ether, etc. may be mentioned. These may be used as single types alone or as a plurality of types combined.

Among these, polyoxyalkyleneglycol is preferable, ethyleneglycol, diethyleneglycol, triethyleneglycol, C₈ or more polyethyleneglycol, polypropyleneglycol, polybutyleneglycol, and polyoxyethylene-polyoxypropyleneglycol are more preferable.

Further, the effect of the present invention becomes much more remarkable, so as the glycol compound (D), one which is expressed by the following general formula (1) is preferable.

HO-(CH₂CH₂O)ₙ-H ··· (1)

In the above formula (1), n is 1 to 3,000, preferably 1 to 1,000, more preferably 1 to 200, particularly preferably 1 to 100.

In the present invention, among the compounds which are expressed by the above formula (1), the effect of the present invention becomes even more remarkable, so ethyleneglycol, diethyleneglycol, and C₈ or more polyethylene glycol are particularly preferable.

Note that, as the number of carbon atoms of the polyethylene glycol, 6,000 or less is preferable, 2,000 or less is more preferable, and 200 or less is particularly preferable.

The content of the glycol compound (D) is, with respect to 100 parts by weight of the nitrile copolymer rubber (A), 0.05 to 15 parts by weight, preferably 0.1 to 12 parts by weight, more preferably 0.2 to 9 parts by weight, furthermore preferably 0.3 to 6 parts by weight. If the content of the glycol compound (D) is too small, the effect of improvement of the solvent crack resistance can no longer be obtained. On the other hand, if too large, the strength characteristics, gasoline permeation resistance, and cold resistance are liable to fall.

Note that, since the effect of the present invention becomes much more remarkable, the ratios of use of the glycol compound (D) and the coupling agent (C) are preferably, by weight ratio, "glycol compounds (D):coupling agent (C)"=1:0.001 to 1:100, more preferably 1:0.01 to 1:50, particularly preferably 1:0.02 to 1:7.

Further, the nitrile copolymer rubber composition for hose use of the present invention preferably further contains a plasticizer. As the plasticizer, it is possible to use one which is used as a plasticizer for rubber formulations in the past. It is not particularly limited, but a plasticizer with an SP value (solubility parameter) by the HOY method of 8 to 10.2 (cal/cm³)^{1/2} is preferably used. If the SP value of the plasticizer is too large, the obtained rubber cross-linked product for hose use tends to become inferior in cold resistance. Further, if too small, the obtained rubber cross-linked product for hose use tends to deteriorate in gasoline permeation resistance.

As specific examples of such a plasticizer (units of SP value is "(cal/cm³)^{1/2}"), for example, dibutoxyethyl adipate (SP value: 8.8), di(butoxyethoxyethyl) adipate (SP value: 9.2), di(methoxytetraethylemeglycol) adipate, di(methoxypentaethyleneglycol) adipate, (methoxytetraethyleneglycol) (methoxypentaethyleneglycol) adipate, and other ester compounds of adipic acid and ether bond-containing alcohol; dibutoxyethyl azelate, di (butoxyethoxyethyl) azelate, and other ester compounds of azelaic acid and ether bond-containing alcohol; dibutoxyethyl sebacate, di(butoxyethoxyethyl) sebacate, and other ester compounds of sebacic acid and ether bond-containing alcohol; dibutoxyethyl phthalate, di (butoxyethoxyethyl) phthalate and other ester compounds of phthalic acid and ether bond-containing alcohol; dibutoxyethyl isophthalate, di (butoxyethoxyethyl) isophthalate, or other ester compounds of isophthalic acid and ether bond-containing alcohol; di-(2-ethylhexyl) adipate (SP value: 8.5), diisodecyl adipate (SP value: 8.3), diisonanyl adipate, dibutyl adipate (SP value: 8.9), and other adipic acid dialkyl esters; di-(2-ethylhexyl) azelate (SP value: 8.5), diisooctyl azelate, di-n-hexyl azelate, and other azeleic acid dialkyl esters; di-n-butyl sebacate (SP value: 8.7), di-(2-ethylhexyl) sebacate (SP value: 8.4), and other sebacic acid dialkyl esters; dibutyl phthalate (SP value: 9.4), di-(2-ethylhexyl) phthalate (SP value: 9.0), di-n-octyl phthalate, diisobutyl phthalate, diheptyl phthalate (SP value: 9.0), diisodecyl phthalate (SP value: 8.5), diundecyl phthalate (SP value: 8.5), diisononyl phthalate (SP value: 8.9), and other phthalic acid dialkyl esters; dicyclohexyl phthalate and other phthalic acid dicycloalkyl esters; diphenyl phthalate, butylbenzyl phthalate (SP value: 10.2), and other phthalic acid aryl esters; di-(2-ethylhexyl) isophthalate, diisooctyl isophthalate, and other isophthalic acid dialkyl esters; di- (2-ethylhexyl) tetrahydrophthalate, di-n-octyl tetrahydrophthalate, diisodecyl tetrahydrophthalate, and other tetrahydrophthalic acid dialkyl esters; tri-(2-ethylhexyl) trimellitate (SP value: 8.9), tri-n-octyl trimellitate (SP value: 8.9), triisodecyl trimellitate (SP value: 8.4), triisooctyl trimellitate, tri-n-hexyl trimellitate, triisononyl trimellitate (SP value: 8.8), triisodecyl trimellitate (SP value: 8.8), and other trimellitic acid derivatives; epoxylated soybean oil (SP value: 9.0), epoxylated linseed oil (SP value: 9.3), and other epoxy-based plasticizers; tricresyl phosphate (SP value: 9.7), and other phosphoric acid ester-based plasticizers; etc. may be mentioned. These may be used as single types alone or as a plurality of types combined.

Among these as well, the obtained rubber cross-linked product for hose use can be made excellent in cold resistance and gasoline permeation resistance, so ester compounds of adipic acid, azeleic acid, sebacic acid, phthalic acid, and other dibasic acids and ether bond-containing alcohols are preferable, ester compounds of adipic acid and ether bond-containing alcohol are more preferable, and di(butoxyethoxyethyl) adipate is particularly preferable.

The content of the plasticizer in the nitrile copolymer composition for hose use of the present Invention is, with respect to 100 parts by weight of the nitrile copolymer rubber (A), preferably 0.1 to 200 parts by weight, more preferably 1 to 150 parts by weight, furthermore preferably 2 to 100 parts by weight. When the content of the plasticizer is in the above range, bleed can be prevented and in addition the effect of the present invention can be made even more remarkable.

Further, the nitrile copolymer rubber composition for hose use of the present invention may further contain an acryl resin and/or vinyl chloride resin. By containing an acryl resin and/or vinyl chloride resin, when made a rubber cross-linked product for hose use, the ozone resistance can be improved much more. The content of the acryl resin and/or vinyl chloride resin is, with respect to 100 parts by weight of the nitrile copolymer rubber (A), preferably 10 to 150 parts by weight, more preferably 15 to 120 parts by weight, furhtermore preferably 20 to 100 parts by weight. If the content of the acryl resin and/or vinyl chloride resin is too small, the effect of addition can become more difficult. On the other hand, if too large, the cold resistance is liable to deteriorate.

The vinyl chloride resin which is used in the present invention is a resin in which the main component monomer which forms the resin is vinyl chloride where the content of the monomer units is preferably 50 to 100 wt%, more preferably 60 to 100 wt%, particularly preferably 70 to 100 wt%.

The acryl resin which is used in the present invention is a resin in which the main component monomer which forms the resin is a (meth)acrylic acid alkyl ester wherein the content of the monomer units is preferably 50 to 100 wt%, more preferably 60 to 100 wt%, particularly preferably 70 to 100 wt%. The number of carbon atoms of the alkyl group is preferably 1 to 20, more preferably 1 to 18, particularly preferably 1 to 10.

The average particle size of the vinyl chloride resin and acryl resin is preferably 0.01 µm to 1 mm, more preferably 0.05 to 100 µm, particularly preferably 0.1 to 10 µm. The average particle size is measured by a laser diffraction scattering type particle size analyzer. If the average particle size of the resin is too small, the rubber cross-linked product for hose use is liable to drop in ozone resistance, while conversely if too large, there is a possibility of poor dispersion occurring at the time of kneading.

The Tg (glass transition temperature) of the vinyl chloride resin and acryl resin is preferably 50 to 180°C, more preferably 60 to 120°C.

The polymerization degree or molecular weight of the vinyl chloride resin and acryl resin is not particularly limited, but with a vinyl chloride resin, the average polymerization degree by the solution viscosity method prescribed by JIS K6721 is preferably 400 to 3,000, more preferably 600 to 2,000. With an acryl resin, the number average molecular weight of standard polystyrene conversion by gel permeation chromatography (GPC) using tetrahydrofuran as a solvent is preferably 10,000 to 7,000,000, more preferably 100,000 to 2,000,000.

If the polymerization degree or molecular weight is too small, the rubber cross-linked product for hose use is liable to deteriorate in ozone resistance, while conversely if too large, the shapeability sometimes becomes inferior.

### Method of Preparation of Nitrile Copolymer Robber Composition for Hose Use

The method of preparation of the nitrile copolymer rubber composition for hose use of the present invention is not particularly limited, but the following method may be used for preparation. That is, first, the above-mentioned method is used to prepare a latex of the nitrile copolymer rubber (A), then an aqueous dispersion of the inorganic filler (B) and an aqueous dispersion of the plasticizer which is added according to need are added to the latex of the nitrile copolymer rubber (A) under stirring to obtain a latex composition. Then, it can be obtained by coagulating the above nitrile copolymer latex composition and rinsing and drying it in accordance with need, then adding the coupling agent (C) and the glycol compounds (D).

The method of preparation of the aqueous dispersion of the inorganic filler (B) is not particularly limited, but it is sufficient to strongly stir an aqueous medium while adding the inorganic filler (B) for preparation. Further, it is also possible to use an aqueous medium containing a 0.1 to 10 wt% amount, with respect to the inorganic filler (B), of sodium polyacrylate, sodium tripolyphosphate, sodium hexamethaphosphate, sodium pyrophosphate, sodium polymalate, Na salt of a β-naphthalene sulfonic acid-formalin condensate, or other dispersant or surfactant etc., inclusion of an anionic dispersant or surfactant is preferable. These may be used as single types alone or as a plurality of types combined. The solid content concentration of the aqueous dispersion of the inorganic filler (B) is preferably 1 to 50 wt%, more preferably 2 to 40 wt%.

Further, in the present invention, when preparing an aqueous dispersion of the inorganic filler (B), it is also possible to use a wet grinding mill to disperse the inorganic filler (B) in water. By using a wet grinding mill for dispersion, when the inorganic filler (B) secondarily aggregates, it is possible to eliminate the secondary aggregation of the inorganic filler (B), thereby it is possible to make the obtained rubber cross-linked product for hose use one which is more superior in gasoline permeation resistance. As the wet grinding mill which is used in this case, a Nanomizer (made by Yoshida Kikai Co., Ltd.), Superwing Mill DM-200 (made by Estec Co., Ltd.), Starburst (made by Sugino Machine), Starmill (made by Ashizawa Finetec), etc. may be mentioned, but it is possible to use another wet grinding mill of course so long as a similar effect is obtained.

Further, the method of preparing the aqueous dispersion of the plasticizer when using a plasticizer is not particularly limited, but it is preferable to prepare it by adding the plasticizer while strongly stirring an aqueous medium which contains a surfactant in an amount of 0.5 to 10 wt% of the plasticizer. As such a surfactant, potassium rosinate, sodium laurylsulfate, potassium oleate, sodium dodecylbenzene sulfonate, or other anionic surfactant; polyoxyethylene alkyl ether, polyoxyethylene alkyl ester, polyoxyethylene sorbitan alkyl ester, or other nonionic surfactant; didecyl dimethyl ammonium chloride, stearyl trimethyl ammonium chloride, or other cationic surfactant etc. may be mentioned. Note that, the concentration of the plasticizer in the aqueous dispersion is preferably made 5 to 70 wt%.

Further, when including in the nitrile copolymer rubber composition for hose use of the present invention a vinyl chloride resin and/or acryl resin, a vinyl chloride resin and/or acryl resin in a latex state or the state of an aqueous dispersion which was prepared by the conventionally known emulsion polymerization method or suspension polymerization method was mixed with a latex composition obtained by adding to the above-mentioned nitrile copolymer rubber (A) the inorganic filler (B) and a plasticizer which is added in accordance with need (latex blend).

The coagulation of the latex composition is not particularly limited, but freeze coagulation, dry coagulation, coagulation by a water-soluble organic liquid, salting out coagulation, or other known method may be used. Among these, adding a latex composition to an aqueous solution which contains a coagulating agent to cause salting out is preferable. As the coagulating agent, calcium chloride, sodium chloride, calcium hydroxide, aluminum sulfate, aluminum hydroxide, etc. may be mentioned. Further, the amount of use of the coagulating agent is, with respect to 100 parts by weight of the nitrile copolymer rubber (A), preferably 0.5 to 150 parts by weight, particularly preferably 0.5 to 20 parts by weight.

Note that, when making the nitrile copolymer (A) one which has cationic monomer units and/or monomer units able to form cations, when salting out the latex composition, it is preferable to add a dilute sulfuric acid aqueous solution etc. to control the pH of the coagulant aqueous solution to the isoelectric point of the latex composition of the nitrile copolymer (A) or less. By controlling the pH of the coagulant aqueous solution, the functional groups of the cationic monomer units and monomer units able to form cations which are contained in the nitrile copolymer rubber (A) rise in zeta potential. Due to this, the dispersibility of the inorganic filler (B) is improved and, the obtained crumbs by coagulation can be made large in particle size.

In general, the particle size of the crumbs has a major effect on the degree of dehydration at the vibrating screen or squeezer after the coagulation and washing steps, the crumb recover rate, and the degree of dryness in the drying step. For exanple, if the crumbs are too small in particle size, with a vibrating screen etc., the crumbs will be too small in particle size and will escape from the mesh of the screen or the polymer will be insufficiently caught up in the squeezer and the degree of dehydration will fall and the productivity will deteriorate. For this reason, the crumbs preferably have an average particle size of 0.5 to 40 mm.

Regarding the method of washing, dehydrating, and drying the crumbs, this may be made a method similar to the washing and dehydrating method and the drying method in production of general rubber. As the washing and dehydrating method, it is sufficient to use a net-mesh type filter, centrifugal separator, etc. to separate the crumbs obtained by coagulation and water, then wash the crumbs and dehydrate them by a squeezer etc. Next, it is possible to use a band dryer, ventilating standing dryer, single-screw extruder, twin-screw extruder, etc. which is generally used for production of rubber so as to dry the crumbs to a desired moisture content to thereby obtain the rubber composition of the present invention. Further, it is also possible to perform the coagulation and drying simultaneously inside a twin-screw extruder.

Further, the coupling agent (C) and glycol compound (D) are added to the rubber composition which is obtained by coagulating the latex composition and drying it in accordance with need and the mixture kneaded by rolls or a Bambury mixer or other kneader, whereby the nitrile copolymer rubber composition for hose use of the present invention is prepared.

The nitrile copolymer rubber composition for hose use of the present invention which is obtained in this way has a Mooney viscosity (ML₁₊₄, 100°C) of preferably 5 to 300, more preferably 10 to 250.

Note that, as the method of preparation of the nitrile copolymer rubber composition for hose use of the present invention, in addition to the above-mentioned method, for example, it is possible to add to the latex of the nitrile copolymer rubber (A) all or part of all or at least one of the ingredients of the inorganic filler (B), coupling agent (C), plasticizer which is added according to need, and acryl resin and/or vinyl chloride resin which is added according to need, then coagulate and dry the mixture and knead the glycol compound (D) and the remaining ingredients by rolls or a Bambury mixer or other kneader.

### Cross-Linkable Nitrile Copolymer Robber Composition for Hose Use

The cross-linkable nitrile copolymer rubber composition for hose use of the present invention is obtained by adding a cross-linking agent to the above-mentioned nitrile copolymer rubber composition for hose use of the present invention.

The cross-linking agent is not particularly limited so long as one which is normally used as a cross-linking agent of a nitrile copolymer rubber. As a representative cross-linking agent, a sulfur-based cross-linking agent or organic peroxide cross-linking agent which cross-links unsaturated bonds of the nitrile copolymer rubber (A) may be mentioned. These may be used as single types alone or as a plurality of types combined. Among these, a sulfur-based cross-linking agent is preferable.

As the sulfur-based cross-linking agents, powdered sulfur, flower of sulfur, precipitated sulfur, colloidal sulfur, surface-treated sulfur, insoluble sulfur, and other sulfurs; sulfur chloride, sulfur dichloride, morpholine disulfide, alkylphenol disulfide, dibenzothiazyl disulfide, N,N' -dithio-bis (hexahydro-2H-azenopine-2), phosphorus-containing polysulfide, high molecular weight polysulfide, and other sulfur-containing compounds; tetramethyl thiuram disulfide, selenium dimethyl dithiocarbamate, 2-(4'-morpholinodithio)benzothiazole or other sulfur-donor compounds; etc. may be mentioned. These may be used as single types alone or as a plurality of types combined.

As organic peroxide cross-linking agents, dicumyl peroxide, cumen hydroperoxide, t-butylcumyl peroxide, p-menthane hydroperaxide, di-t-butylperoxide, 1,3-bis (t-butylperoxyisopropyl) benzene, 1,4-bis(t-butylperoxyisopropyl) benzene, 1,1-di-t-butylperoxy-3,3-trimethylcyclohexane, 4,4-bis-(t-butyl-peroxy)-n-butylvalerate, 2,5-dimethyl-2,5-di-t-butylperoxyhexane, 2,5-dimethyl-2,5-di-t-butylperoxyhexine-3, 1,1-di-t-butylperoxy-3,5,5-trimethylcyclohexane, p-chlorobenzoylperoxide, t-butylperoxyisopropyl carbonate, t-butylperoxybenzoete, etc. may be mentioned. These may be used as single types alone or as a plurality of types combined.

The content of the cross-linking agent in the cross-linkable nitrile copolymer rubber composition for hose use of the present invention is not particularly limited, but is, with respect to 100 parts by weight of the nitrile copolymer, rubber (A), preferably 0.1 to 10 parts by weight, more preferably 0.2 to 5 parts by weight.

When using an organic peroxide cross-linking agent, as the cross-linking aid, trimethylolprcpane trimethacrylate, divinylbenzene, ethylene dimethacrylate, triallyl isocyanulate, and other polyfunctional monomers etc. may be jointly used. The amount of use of these cross-linking aids is not particularly limited, but is, with respect to 100 parts by weight of the nitrile copolymer rubber (A), preferably 0.5 to 20 parts by weight in range.

When using a sulfur-based cross-linking agent, it is possible to jointly use zinc white, stearic acid, or another cross-linking aid and a guanidine-based, aldehyde-amine-based, aldehyde-ammonia-based, thiazole-based, sulfenamide-based, thiourea-based, or other cross-linking accelerator. The amount of use of these cross-linking aid and cross-linking accelerator is not particularly limited, but is preferably, with respect to the nitrile copolymer rubber (A) as 100 parts by weight, 0.1 to 10 parts by weight in range.

Further, the nitrile copolymer rubber composition for hose use or cross-linkable nitrile copolymer rubber composition for hose use of the present invention may contain, in accordance with need, compounding agents which are used in general rubber, for example, cross-linking retardants, antiaging agents, fillers other than the inorganic filler (B), slip agents, adhesives, lubricants, processing aids, flame retardants, anti-mold agents, anti-static agents, coloring agents, and other additives.

As an antiaging agent, a phenol-based, amine-based, benzimidazole-based, phosphoric acid-based, or other antiaging agent may be used. As a phenol-based one, 2,2'-methylene bis(4-methyl-6-t-butylphenol) etc. may be mentioned, as an amine-based one, 4,4' -bis(α,α-dimethylbenzyl)diphenylamine, N-isopropyl-N' -phenyl-p-phenylene diamine, etc. may be mentioned, while as a benzimidazole-based one, 2-mercaptobenzimidazole etc. may be mentioned. These may be used alone as single types or as two or more types combined.

As fillers other than the inorganic filler (B), for example, carbon black, silica, calcium carbonate, aluminum silicate, magnesium silicate, calcium silicate, magnesium oxide, staple fibers, zinc (meth)acrylate, magnesium (meth)acrylate, or other α,β-ethylenically unsaturated carboxylic acid metal salts, etc. may be mentioned. These fillers may be treated by coupling treatment by a silane coupling agent, titanium coupling agent, etc. or treated by a surface modification agent by a higher fatty acid or its metal salt, ester or amide or other higher fatty acid derivative or surfactant etc.

Further, the nitrile copolymer rubber composition for hose use and cross-linkable nitrile copolymer rubber composition for hose use of the present invention may contain, to an extent not detracting from the effect of the present invention, a rubber or resin other than the nitrile copolymer rubber (A) and vinyl chloride resin and acryl resin. The rubber or resin other than the nitrile copolymer rubber (A) is not particularly limited, but an acryl rubber, ethylene-acrylic acid copolymer rubber, fluororubber, styrene-butadiene copolymer rubber, ethylene-propylene copolymer rubber, ethylene-propylene-diene ternary copolymer rubber, natural rubber, polyisoprene rubber, ethylene-vinyl acetate copolymer, epichlorohydrin rubber, urethane rubber, chloroprene rubber, chlorosulfonated polyethylene, chlorinated polyethylene, etc. may be mentioned. Note that, the amount when blending in a rubber or resin other than the nitrile copolymer rubber (A) and vinyl chloride resin and acryl resin is, with respect to 100 parts by weight of the nitrile copolymer rubber (A), preferably 100 parts by weight or less, more preferably 50 parts by weight or less, particularly preferably 30 parts by weight or less.

The method of preparation of the cross-linkable nitrile copolymer rubber composition for hose use of the present invention is not particularly limited but the method of adding to the above-mentioned nitrile copolymer rubber composition for hose use a cross-linking agent, cross-linking aid, and other compounding agent and kneading the mixture by rolls or a Bambury mixer or other kneader etc. may be mentioned. Note that, the order of mixing in this case is not particularly limited, but it is sufficient to fully mix the ingredients which are resistant to reaction or breakdown by heat, then mix the ingredients which easily react or easily break down under heat, for example, the cross-linking agent, cross-linking accelerator, etc. at a temperature at which the reaction or breakdown does not occur and in a short time.

The cross-linkable nitrile copolymer rubber composition for hose use of the present invention has a Mooney viscosity (ML₁₊₄, 100°C) of preferably 5 to 300, more preferably 10 to 250.

### Rubber Cross-Linked Product for Hose Use

The rubber cross-linked product for hose use of the present invention is obtained by cross-linking the above cross-linkable nitrile copolymer rubber composition for hose use.

When cross-linking the cross-linkable nitrile copolymer rubber composition for hose use of the present invention, the composition is shaped by a shaping machine in accordance with the shape of the product to be made (rubber cross-linked product for hose use), for example, an extruder, injection molding machine, press, rolls, etc. then reacted for cross-linking to thereby fix the shape of the cross-linked product. When performing the cross-linking, the cross-linking may be performed after shaping or simultaneously with the shaping. The shaping temperature is usually 10 to 200°C, preferably 25 to 120°C. The cross-linking temperature is usually 100 to 200°C, preferably 130 to 190°C, while the cross-slinking time is usually 1 minute to 24 hours, preferably 2 minutes to 2 hours.

Further, the rubber cross-linked product for hose use, defending on its shape, size, etc., sometimes will not be sufficiently cross-linked up to its inside even if the surface is cross-linked, so the product may be further heated for secondary cross-linking.

The rubber cross-linked product for hose use of the present invention which is obtained in this way is excellent in gasoline permeation resistance, cold resistance, sour gasoline resistance, and solvent crack resistance. For this reason, by making a hose comprised of one or more layers in which a layer (I) comprised of the rubber cross-linked product for hose use of the present invention for at least one layer, it may be suitably used for a hose for fuel use. Note that, in the case of a laminate of two or more layers, the layer (I) which is comprised of the rubber cross-linked product for hose use of the present invention may be used as any of an inside layer, intermediate layer, and outside layer. As the layer (II) forming the laminate other than the layer (I), the nitrile copolymer rubber (L) with a content of α, β-ethylenically unsaturated nitrile monomer units of preferably 5 to 60 wt%, more preferably 18 to 55 wt%, one containing the nitrile copolymer rubber (L) and an acryl-based resin and/or vinyl chloride-based resin, or a fluorine rubber, chloroprene rubber, hydrin rubber, chlorosulfonated polyethylene rubber, acryl rubber, ethylene-acrylic acid copolymer, ethylene-propylene copolymer, ethylene-propylene-diene ternary copolymer, butyl rubber, iscprene rubber, natural rubber, styrene-butadiene copolymer, fluorine resin, polyamide resin, polyvinyl alcohol, ethylene-vinyl acetate copolymer resin, ethylene-vinyl alcohol copolymer resin, polybutylene naphthalate, polyphenylene sulfide, polyolefin resin, polyester resin, etc. may be mentioned, but from the viewpoint of improvement of the gasoline permeation resistance, a mixture containing nitrile copolymer rubber (L) and acryl resin and/or vinyl chloride resin, fluororubber, or hydrin rubber is preferable. These may be used as single types alone or as a plurality of types combined.

Further, in accordance with need, to bond the layer (I) and the layer (II), as one or both of the layer (I) and layer (II), tetrabutylphosphonium benzotriazolate, tetraoctylphosphonium benzotriazolate, methyltrioctylphosphonium benzotriazolate, tetrabutylphosphonium tolyltriazolate, tetraoctylphosphonium tolyltriazolate, or other phosphonium salt; 1,8-diazabicyclo(5.4.0)undecene-7 salt (DBU salt), 1,5-diazabicyclo(4.3.0)-nonen-5 salt (DEN salt), etc. may be contained. Between the layer (I) and the layer (II), a new layer (III) may be used as a binding layer. As the layer (III), it is possible to use a resin or rubber composition similar to the resin or rubber composition which forms the above-mentioned layer (II), but from the viewpoint of improving the gasoline permeation resistance, one which contains the nitrile copolymer rubber (L) and acryl resin and/or vinyl chloride resin, a fluororubber, or a hydrin rubber is preferable. In this case, it is possible to use the resin or rubber composition which forms the above-mentioned layer (II) as a single type alone or as a plurality of types combined. It is also possible to include tetrabutylphosphonium benzotriazolate, tetraoctylphosphonium benzotriazolate, methyltrioctylphosphonium benzotriazolate, tetrabutylphosphonium tolyltriazolate, tetraoctylphosphonium tolyltriazolate, or other phosphonium salt; 1,8-diazabicyclo(5.4.0)undecene-7 salt (DBU salt), 1,5-diazabicyclo(4.3.0)-nonene-5 salt (DEN salt), etc.

Here, the thickness of the layer (I) is preferably 0.1 to 10 mm, more preferably 0.5 to 5 mm. Further, in the case of a laminate of two layers or more, the thickness of a layer other than the layer (I) is preferably 0.1 to 10 mm, more preferably 0.5 to 5 mm.

Note that, the method of production of a hose which includes the rubber cross-linked product for hose use of the present invention which has the above such configuration is not particularly limited, but it is possible to use an extruder etc. to shape the product into a tube and then cross-link it to obtain the hose of the present invention. The cross-linkable nitrile copolymer rubber composition for hose use of the present invention has the property of resistance to mandrel cracks, so can be produced by using a mandrel.

That is, when making the hose a single layer one comprised of only the cross-linked product of the present invention, first, the cross-linkable nitrile copolymer rubber composition for hose use of the present invention is formed into a tubular shape, a mandrel is inserted into the obtained tubular shaped article to fix it in shape, then the cross-linkable nitrile copolymer rubber composition for hose use is cross-linked.

Alternatively, when making the hose a multilayer one including the cross-linked product for hose use of the present invention, it is possible to laminate the cross-linkable nitrile copolymer rubber composition for hose use of the present invention and the resin or rubber composition for forming the layers other than the layer comprised of the cross-linked product for hose use of the present invention, shape them into a tubular shape, insert a mandrel into the obtained tubular shaped laminated article to fix it in shape, then cross-link the cross-linkable nitrile copolymer rubber composition for hose use.

The rubber cross-linked product for hose use of the present invention may be used for an oil hose, fuel hose, filler hose, gas hose, brake hose, coolant hose, or other hose. Note that, as the gas of the above gas hose, air, nitrogen, oxygen, hydrogen, carbon dioxide, carbon monoxide, methane, ethane, propane, dimethyl ether, LPG, steam, etc. may be mentioned.

Note that, the rubber cross-linked product obtained by cross-linking the cross-linkable nitrile copolymer rubber composition for hose use of the present invention, as explained above, is able to be used for hose use, but can also be used for packing, gaskets, O-rings, oil seals, or other seal members; diaphragms; accumulator bladders; boots; etc.

### EXAMPLES

Below, examples and comparative examples will be given to specifically explain the present invention. Below, unless otherwise indicated, the "parts" are based on weight. Note that the tests and evaluations were based on the following.

### Money Viscosity

The Mooney viscosity of the nitrile copolymer rubber (hydrogenated nitrile copolymer rubber) (polymer Mooney viscosity) (ML₁₊₄, 100°C) was measured based on JIS K6300.

### Normal Physical Properties (Tensile Strength, Elongation, 100% Tensile Stress, Hardness)

A cross-linkable nitrile copolymer rubber composition (including case of "cross-linkable hydrogenated nitrile copolymer rubber composition for hose use") was placed in a length 15 cm, width 15 cm, and depth 0.2 cm mold and press formed while applying pressure at 160°C for 20 minutes to obtain a plate-shaped rubber cross-linked product. The obtained plate-shaped rubber cross-linked product was punched into JIS No. 3 dumbbell shapes to prepare test pieces, and the test pieces were used in accordance with JIS K6251 to measure the tensile strength, elongation, and 100% tensile stress and further in accordance with JIS K6253 to measure the hardness of the rubber cross-linked product using a Durometer hardness tester type A.

### Gasoline Permeation Coefficient

Plate-shaped rubber cross-linked product similar to the one used for evaluation of the above normal physical properties was prepared, "a mixture of isoctane, toluene, and ethanol in a weight ratio of 2:2:1" as fuel oil was used, and the aluminum cup method was employed to measure the gasoline permeation coefficient. Specifically, a 100 ml capacity aluminum cup was filled with the above fuel oil to 50 ml, the plate-shaped rubber cross-linked product was placed over it to cap it, then fasteners were used to adjust the area by which the plate-shaped rubber cross-linked product separated the inside and outside of the aluminum cup to 25.50 cm², the aluminum cup was allowed to stand in a 23°C constant temperature tank, then the weight was measured every 24 hours to thereby measure the amount of permeation of the oil every 24 hours. The maximum amount was defined the amount of permeation (unit: g·mm/m². day).

Note that, the lower the gasoline permeation coefficient, the better.

### Embrittlement Temperature

A sample similar to the plate-shaped rubber cross-linked product which was used for evaluation of the normal physical properties was used to measure the embrittlement temperature in accordance with JIS K6261.

### Sour Gasoline Resistance Test

A sample similar to the plate-shaped rubber cross-linked product which was used for evaluation of the normal physical properties was prepared. The plate-shaped rubber cross-linked product was immersed in test oil, comprised of fuel oil constituted as "isooctane, toluene, and ethanol mixed in a weight ratio of 2:2:1" into which dilauroyl peroxide was dissolved in a 3 wt% concentration, under conditions of a temperature of 40°C for 500 hours (the test oil being changed with a new work twice per 168 hours). Further, after the elapse of 500 hours, the sample was subjected to a tensile test based on JIS K6253. The presence of any cracks at the time of stretching by the tensile test was checked for to evaluate the sour gasoline resistance.

### Solvent Crack Resistance

A sample similar to the sheet-shaped rubber cross-linked product which was used for evaluation of the normal physical properties was prepared. Test pieces of a length of 100 mm and width of 10 mm were punched out in the grain direction. The blade used in the flexing test of JIS K6260 was used to make cuts in the center parts of the test pieces in lengths of 2 mm in the horizontal direction. The test pieces were stretches 40% and fastened, then immersed in a solvent set to 40°C constituted as "fixture of isooctane, toluene, and ethanol in a weight ratio 2:2:1". Further, the immersed samples were observed and evaluated in accordance with the following criteria for solvent crack resistance. The longer the time until breakage, the better the solvent crack resistance.
Good: Time until test piece breaks of 5 minutes or more
Poor: Time until test piece breaks of less than 5 minutes

### Production Example 1 (Production of Latex of Nitrile Copolymer Robber (A1))

To a reaction vessel, water in 240 parts, acrylonitrile in 75.7 parts, and sodium dodecylbenzene sulfonate (emulsifier) in 2.5 parts were charged and the temperature adjusted to 5°C. Next, the gas phase was reduced in pressure and sufficiently removed, then 1,3-butadiene in 22 parts, a polymerization initiator constituted by p-methane hydroperoxide in 0.06 part, sodium ethylene diamine tetraacetate in 0.02 part, ferrous sulfate (7-hydrate) in 0.006 part and sodium formaldehyde sulfoxylate in 0.06 part, and a chain transfer agent of t-dodecyl mercaptan in 1 part were added to start a first stage of emulsion polymerization. After the start of the reaction, when the polymerization conversion rate of the charged monomer reached 42 wt% and 60 wt%, the reaction vessel was additionally charged with 1,3-butadiene respectively in 12 parts and 12 parts for a second stage and a third stage of polymerization reaction. After that, when the polymerization conversion rate of the total charged monomers reached 75 wt%, hydroxylamine sulfate in 0.3 part and potassium hydroxide in 0.2 part were added to make the polymerization reaction steep. After stopping the reaction, the content of the reaction vessel was warmed to 70 °C and steam distillation was used under reduced pressure to recover the unreacted monomers to obtain a latex of the nitrile copolymer rubber (A1) (solid content: 24 wt%).

The ratios of content of the monomers units which form the obtained nitrile copolymer, rubber (A1) were measured by H¹-NMR using an FT NMR apparatus made by JEOL (JNM-EX400WB), whereupon the acrylonitrile monomer units were 50 wt% and the 1,3-butadiene units were 50 wt%. Further, the nitrile copolymer, rubber (A1) had a Money viscosity (polymer Mooney viscosity) of 75.

### Production Example 2 (Production of Latex of Nitrile Copolymer Rubber (A2))

Except for using the monomers charged for the first stage of the emulsion polymerization in Production Example 1, acrylonitrile in 75.7 parts and 1,3-butadiene in 22 parts plus further 2-vinylpyridine in 2.2 parts, the same procedure was performed as in Production Example 1 to obtain a latex of a nitrile copolymer rubber (A2) (solid content: 24 wit%).

The ratios of content of the monomer units which form the obtained nitrile copolymer rubber (A2) were measured in the same way as in Production Example 1, whereupon the acrylonitrile monomer units were 50 wt%, the 2-vinylpyridine units were 2 wt%, and the 1,3-butadiene units were 48 wt%. Further, the nitrile copolymer rubber (A2) had a Money viscosity (polymer Mooney viscosity) of 73.

### Production Example 3 (Production of Latex of Hydrogenated Nitrile Copolymer Rubber (A3))

The latex of the nitrile copolymer rubber (A1) which was obtained at Production Example 1 was hydrogenated at a hydrogen pressure of 3 MPa and a temperature of 50°C for 6 hours, while adding a palladium catalyst (solution of 1 wt% palladium acetate acetone solution and equal weight of ion exchanged water mixed together) to the reactor so that the palladium content became 1000 ppm with respect to the dry rubber weight contained in the latex, so as to thereby obtain a latex of hydrogenated nitrile copolymer rubber (A3).

The ratios of content of the monomer units which form the obtained hydrogenated nitrile copolymer rubber (A3) were measured in the same way as in Production Example 1, whereupon the acrylonitrile monomer units were 50 wt% and the total of the 1,3-butadiene units and saturated butadiene units was 50 wt%. Further, the hydrogenated nitrile copolymer rubber (A3) had a Mooney viscosity (polymer Mooney viscosity) of 155 and an iodine value of 20.

### Production Example 4 (Production of Latex of Vinyl Chloride Resin)

A pressure resistant reaction vessel was charged with water in 120 parts, sodium laurylsulfate in 0.8 part, and potassium persulfate in 0.06 part, was reduced in pressure and deaerated twice repeatedly, then was charged with vinyl chloride in 100 parts. The result was stirred while warming for emulsion polymerization at 47°C. After the polymerization conversion rate reached 90%, the result was cooled to room temperature and the unreacted monomer was removed. The obtained vinyl chloride resin latex had a concentration of 41 wt%. The vinyl chloride resin had an average particle size of 0.3 µm. The average polymerization degree, according to JIS K6721, was 1,300, and the glass transition temperature was 80°C.

### Production Example 5 (Production of Latex of Acryl Resign)

To a reactor equipped with a thermometer and stirrer, ion exchanged water in 150 parts, sodium octylsulfate in 2 parts, ammonium persulfate (polymerization initiator) in 0.3 part, methyl methacrylate in 80 parts, acrylonitrile in 20 parts, and t-dodecyl mercaptan (molecular weight adjuster) in 0.05 part were added. While stirring, emulsion polymerization was started at a temperature of 80°C. After 5 hours, the reaction was stopped to obtain a latex. The obtained acryl resin latex had a concentration of 39 wt% and a polymerization conversion rate of 98 wt%. The acryl resin had an average particle size of 0.2 µm, a number average molecular weight of 600,000, and a glass transition temperature of 103°C.

### Example 1

### Preparation of Latex Composition of Nitrile Copolymer Rubber

An inorganic filler (B) constituted by refined bentonite (product name "BENGEL HV", made by Hojun, aspect ratio: 295) 100 parts was added into distilled water 1995 parts in the presence of sodium polyacrylate 5 parts and the mixture strongly stirred to obtain an aqueous dispersion of the inorganic filler (B) of a solid content concentration 5%. Further, di(butoxyethoxyethyl) adipate (product name "Adeka Sizer RS-107", made by ADEKA, plasticizer) in a 50 wt% aqueous emulsion was prepared by mixing under strong stirring while using an emulsifier constituted by potassium oleate in an amount of 2 wt% of the plasticizer.

Further, the latex of the nitrile copolymer rubber (A1) which was obtained in Production Example 1 was stirred in the container while adding and dispersing the aqueous dispersion of the inorganic filler (B) which was prepared above. Note that, the aqueous dispersion of the inorganic filler (B) was added to give inorganic filler (B) 20 parts with respect to 100 parts of the solid content of the latex of the nitrile copolymer rubber (A1) (amount of nitrile copolymer rubber) so as to give a solid content (nitrile copolymer rubber and inorganic filler (B)) concentration of 15%.

Next, to the solution of the nitrile copolymer rubber (A1) in which the inorganic filler (B) was dispersed, with respect to 100 parts of the nitrile copolymer rubber (A1), an emulsion which contains di(butoxyethoxyethyl) adipate prepared above in 30 parts (amount of plasticizer 15 parts) was added for mixing and dispersion to obtain a nitrile copolymer latex composition. Further, the obtained nitrile copolymer latex compositions was poured, with stirring, into an aqueous solution which contained calcium chloride (coagulant) in an amount of 4 wt% with respect to the amount of nitrile copolymer rubber (A1) in the latex composition, while adjusting the pH by suitably adding 10% dilute sulfuric acid so that the pH of the aqueous solution during coagulation became 2, so as to cause the composition to coagulate and to produce crumbs comprised of a mixture of nitrile copolymer rubber (A1), inorganic filler (B), and plasticizer.

### Preparation of Cross-Linkable Nitrile Copolymer Rubber Composition for Hose Use

Further, the obtained crumbs were separated by filtration, rinsed, then dried in vacuo at 60°C. Next, a Bambury mixer was used to add to the above dried crumbs, with respect to 100 parts of the nitrile copolymer rubber (A1) in the crumbs, a coupling agent (C) constituted by β-(3,4-epoxycyclohexyl)ethyltrimethysilane (molecular weight 246.4) 2 parts, a glycol compound (D) constituted by polyethylene glycol (product name: Polyethyleneglycol 4,000, made by Wako Pure Chemical Industries, average molecular weight 3,000) 4 parts, MT carbon black ("Thermax(R) Medium Thermal Carbon Black N990", made by CANCARB) 10 parts, a cross-linking aid constituted by zinc white 5 parts and stearic acid 1 part, and these were mixed at 50°C. Further, this mixture was transferred to rolls where a cross-linking agent constituted by 325 mesh sulfur 0.5 part and tetramethylthiuramdisulfide (product name "Noccelar TT", made by Ouchi Shinko Chemical Industrial) 1.5 parts and N-cyclohexyl-2-benzothiazolylsulfenamide (product name "Noccelar CZ", made by Ouchi Shinko Chemical Industrial, cross-linking accelerator) 1.5 parts were added. The mixture was kneaded at 50°C to prepare a cross-linkable nitrile copolymer rubber composition for hose use.

The rubber cross-linked product which was obtained by cross-linking the obtained cross-linkable nitrile copolymer rubber composition for hose use was evaluated for normal physical properties (tensile strength, elongation, 100% tensile stress, hardness), gasoline permeation coefficient, embrittlement temperature, sour gasoline resistance, and solvent crack resistance. The results are shown in Table 1.

### Examples 2 and 3

Except for changing the amount of the glycol compound (D) constituted by polyethylene glycol from 4 parts to respectively 0.5 part (Example 2) and 8 parts (Example 3), the same procedure was followed as in Example 1 to prepare cross-linkable nitrile copolymer rubber compositions for hose use. These were evaluated in the same way as Example 1. The results are shown in Table 1.

### Examples 4 and 5

Except for using as the glycol compound (D), instead of polyethylene glycol 4 parts, respectively ethyleneglycol 4 parts (Example 4) and diethylene glycol 4 parts (Example 5), the same procedure was followed as in Example 1 to prepare cross-linkable nitrile copolymer rubber compositions for hose use. These were evaluated in the same way as Example 1. The results are shown in Table 1.

### Examples 6 and 7

Except for changing the content of the coupling agent (C) constituted by β**-**(3,4-epoxycyclohexyl)ethyltrimethoxysilane from 2 parts to respectively 0.1 part (Example 6) and 10 parts (Example 7), the same procedure was followed as in Example 1 to prepare cross-linkable nitrile copolymer rubber compositions for hose use. These were evaluated in the same way as Example 1. The results are shown in Table 1.

### Example 8

Except for using, instead of the nitrile copolymer rubber (A1), the nitrile copolymer rubber (A2) which was obtained in Production Example 2, the same procedure was followed as in Example 1 to prepare a cross-linkable nitrile copolymer rubber composition for hose use. This was evaluated in the same way as Example 1. The results are shown in Table 1.

### Example 9

Except for, when preparing the latex composition of the nitrile copolymer rubber, further adding, with respect to 100 parts of the nitrile copolymer rubber (A2), the latex of the vinyl chloride resin which was obtained in the Production Example 4 (vinyl chloride resin 45 parts) and changing the amount of the plasticizer constituted by the di(butoxyethoxyethyl) adipate to 20 parts, the same procedure was followed as in Example 8 to produce crumbs comprised of a mixture of the nitrile copolymer rubber (A2), inorganic filler (B), plasticizer, and vinyl chloride resin.

Further, the obtained crumbs were filtrated, rinsed, then dried in vacuo at 60°C. Next, a Hamburg mixer was used to add to the above dried crumbs, with respect to 100 parts by weight of the nitrile copolymer rubber (A2) in the crumbs, a coupling agent (C) constituted by β-(3,4-epoxycyclohexyl) ethyltrimethoxysilane 0.5 part and a glycol compound (D) constituted by polyethylene glycol (product name: polyethylene glycol 4,000, made by Wako Pure Chemical Industries, average molecular weight 3,000) 2 parts and these were then mixed at 180°C. Further, this mixture was transferred to rolls and cooled, then again a Bambury mixer was used to add MT carbon black ("Thermax(R) Medium Thermal Carbon Black N990", made by CANCARB) 10 parts, a plasticizer constituted by di(butoxyethoxyethyl) adipate 25 parts, and a cross-linking aid constituted by zinc white 5 parts and stearic acid 1 part, and these were then mixed at 50°C. Further, this mixture was transferred to rolls where a cross-linking agent constituted by 325 mesh sulfur 0.6 part and tetramethylthiuramdisulfide (product name "Noccelar TT", made by Ouchi Shinko Chemical Industrial) 2 part and N-cyclohexyl-2-benzothiazolylsulfenamide (product name "Noccelar CZ", made by Ouchi Shinko Chemical Industrial, cross-linking accelerator) 2 parts were added. The mixture was kneaded at 50°C to prepare a cross-linkable nitrile copolymer rubber composition for hose use. This was evaluated in the same way as Example 1. The results are shown in Table 1.

### Example 10

Except for, when preparing the latex composition of the nitrile copolymer rubber, further adding, with respect to 100 parts of the nitrile copolymer rubber (A2), instead of the latex of the vinyl chloride resin which was obtained in the Production Example 4, the latex of the acryl resin which was obtained at the Production Example 5 (acryl resin 45 parts), the same procedure was followed as in Example 9 to prepare a cross-linkable nitrile copolymer rubber composition for hose use. This was evaluated in the same way as Example 1. The results are shown in Table 1.

### Comparative Example 1

Except for not using the glycol compound (D) constituted by polyethylene glycol, the same procedure was followed as in Example 1 to prepare a cross-linkable nitrile copolymer rubber composition for hose use. This was evaluated in the same way as Example 1. The results are shown in Table 1.

### Comparative Example 2

Except for changing the content of the glycol compound (D) constituted by polyethylene glycol from 4 parts to 30 parts, the same procedure was followed as in Example 1 to prepare a cross-linkable nitrile copolymer rubber composition for hose use. This was evaluated in the same way as Example 1. The results are shown in Table 1.

### Comparative Example 3

Except for not using the coupling agent (C) constituted by β**-**(3,4-epoxycyclohexyl)ethyltrimethoxysilane, the same procedure was followed as in Example 1 to prepare a cross-linkable nitrile copolymer rubber composition for hose use. This was evaluated in the same way as Example 1. The results are shown in Table 1.

### Comparative Example 4

Except for changing the amount of the coupling agent (C) constituted by β-(3,4-epoxycyclahexyl)ethyltrimethoxysilane from 2 parts to 30 parts, the same procedure was followed as in Example 1 to prepare a cross-linkable nitrile copolymer rubber compositions for hose use. This was evaluated in the same way as Example 1. The results are shown in Table 1.

### Comparative Example 5

Except for not using the glycol compound (D) constituted by polyethyleneglycol and the coupling agent (C) constituted by β-(3,4-epaxycyclohexyl)ethyltrimethoxysilane, the same procedure was followed as in Example 1 to prepare cross-linkable nitrile copolymer rubber composition for hose use. This was evaluated in the same way as Example 1. The results are shown in Table 1.

### Comparative Example 6

Except for not using the inorganic filler (B) constituted by refined bentonite, the same procedure was followed as in Example 1 to prepare a cross-linkable nitrile copolymer rubber composition for hose use. This was evaluated in the same way as Example 1. The results are shown in Table 1.

### Comparative Example 7

Except for using, instead of the inorganic filler (B) constituted by refined bentonite 20 parts, magnesium silicate (aspect ratio: 11, product name: Mistron Vapor, made by Ninon Mistron Co., Ltd.) 20 parts, the same procedure was followed as in Example 1 to prepare a cross-linkable nitrile copolymer rubber composition for hose use. This was evaluated in the same way as Example 1. The results are shown in Table 1.

### Example 11

Except for using, instead of the nitrile copolymer rubber (A1), the hydrogenated nitrile copolymer rubber (A3) which was obtained in Production Example 3, the same procedure was followed as in Example 1 to produce a cross-linkable hydrogenated nitrile copolymer rubber composition for hose use. This was evaluated in the same way. The results are shown in Table 2.

### Comparative Example 8

Except for not using a glycol compound (D) constituted by polyethyleneglycol and a coupling agent (C) constituted by β-(3,4-epoxycyclohexyl)ethyl-trimethoxysilane, the same procedure was followed as in Example 11 to prepare a cross-linkable hydrogenated nitrile copolymer rubber composition for hose use. This was evaluated in the same way as Example 1. The results are shown in Table 2.

Table 1

**Table 1**

| | | | Examples | | | | | | | | | | | Comparative examples | | | | | | |
|---|---|---|---|---|---|---|---|---|---|---|---|---|---|---|---|---|---|---|---|---|
| | | | 1 | 2 | 3 | 4 | 5 | 6 | 7 | 8 | 9 | 10 | | 1 | 2 | 3 | 4 | 5 | 6 | 7 |
| Nitrile copolymer rubber | | | | | | | | | | | | | | | | | | | | |
| | Acrylonitrile units | (wt%) | 50 | 50 | 50 | 50 | 50 | 50 | 50 | 50 | 50 | 50 | | 50 | 50 | 50 | 50 | 50 | 50 | 50 |
| | 1,3-butadiene units | (wt%) | 50 | 50 | 50 | 50 | 50 | 50 | 50 | 48 | 48 | 48 | | 50 | 50 | 50 | 50 | 50 | 50 | 50 |
| | 2-vinylpyridine units | (wt%) | - | - | - | | - | - | - | - | 2 | 2 | | - | - | - | - | - | - | - |
| Formulation of cross-linkable nitrile copolymer rubber composition (only part described) | | | | | | | | | | | | | | | | | | | | |
| | Nitrile copolymer rubber | (parts) | 100 | 100 | 100 | 100 | 100 | 100 | 100 | 100 | 100 | 100 | | 100 | 100 | 100 | 100 | 100 | 100 | 100 |
| | Refined bentonite | (parts) | 20 | 20 | 20 | 20 | 20 | 20 | 20 | 20 | 20 | 20 | | 20 | 20 | 20 | 20 | 20 | - | - |
| | Magnesium silicate | (parts) | - | - | - | - | - | - | - | - | - | - | | - | - | - | - | - | - | 20 |
| | Coupling agen*¹⁾ | (parts) | 2 | 2 | 2 | 2 | 2 | 0.1 | 10 | 2 | 0.5 | 0.5 | | 2 | 2 | - | 30 | - | 2 | 2 |
| | Polyethyloneglycol | (parts) | 4 | 0.5 | 8 | - | - | - | - | 4 | 2 | 2 | | - | - | - | - | 4 | 4 | 4 |
| | Ethyloneslycol | (parts) | - | - | - | 4 | - | - | - | - | - | - | | - | - | - | - | - | - | - |
| | Diethyleneglycol | (parts) | - | - | - | - | 4 | - | - | - | - | - | | - | - | - | - | - | - | - |
| | Di(butoxyethoxyethyl)adipate | (parts) | 15 | 15 | 15 | 15 | 15 | 15 | 15 | 15 | 45 | 45 | | 15 | 15 | 15 | 15 | 15 | 15 | 15 |
| | Vinyl chloride resin | (parts) | - | - | - | - | - | - | - | - | 45 | - | | - | - | - | - | - | - | - |
| | Acryl resin | (parts) | - | - | - | - | - | - | - | - | - | 45 | | - | - | - | - | - | - | - |
| Tensile strength | | (MPa) | 20.5 | 21.1 | 18.5 | 19.9 | 18.9 | 22.2 | 21.1 | 21.5 | 19.8 | 19.2 | | 21.1 | 13.2 | 19.8 | 12.3 | 21.1 | 7.5 | 10.8 |
| Elongation | | (%) | 590 | 530 | 630 | 580 | 560 | 620 | 630 | 550 | 450 | 480 | | 500 | 590 | 500 | 420 | 470 | 700 | 620 |
| 100% tensile stress | | (MPa) | 4.6 | 5.0 | 3.9 | 3.8 | 4.9 | 4.9 | 4.6 | 5.5 | 6.4 | 5.7 | | 5.4 | 2.9 | 5.2 | 3.2 | 6.3 | 1.3 | 1.6 |
| Hardness | | (Duro-A) | 71 | 72 | 70 | 69 | 73 | 72 | 71 | 73 | 67 | 66 | | 73 | 73 | 73 | 63 | 76 | 53 | 58 |
| Gasoline permeation coefficient | | (g·mm/m²·day) | 295 | 290 | 298 | 293 | 294 | 295 | 299 | 250 | 200 | 210 | | 290 | 355 | 350 | 630 | 338 | 625 | 610 |
| Embrittlement temperature | | (°C) | -23 | -21 | -20 | -22 | -22 | -20 | -20 | -20 | -23 | -23 | | -22 | -11 | -16 | -25 | -15 | -20 | -20 |
| Sour gasoline resistance (presence of cracks) | | | None | None | None | None | None | None | None | None | None | None | | None | None | None | None | None | Yes | Yes |
| Solvent crack resistance | | | Good | Good | Good | Good | Good | Good | Good | Good | Good | Good | | Poor | Good | Good | Poor | Good | Good | Good |

| | | | | | | | | | | | | | | | | | | | | |
|---|---|---|---|---|---|---|---|---|---|---|---|---|---|---|---|---|---|---|---|---|
| *1) An coupling agent *β*-(3.4-epoxycyclohexyl)ethyltrimethoxysilane used | | | | | | | | | | | | | | | | | | | | |

Table 2

**Table 2**

| | | | Examples | Comparative examples |
|---|---|---|---|---|
| | | | 11 | 8 |
| Hydrogenated nitrile copolymer rubber | | | | |
| | Acrylonitrile units | (wt%) | 50 | 50 |
| | 1,3-butadione units end saturated butadiene | (wt%) | 50 | 50 |
| | 2-vinylpyridine units | (wt%) | - | - |
| Formulation of cross-linkable hydrogenated nitrile copolymer rubber composition (only part described) | | | | |
| | Hydrogenated nitrile copolymer rubber | (parts) | 100 | 100 |
| | Refined bentonite | (parts) | 20 | 20 |
| | Magnesium silicate | (parts) | - | - |
| | Coupling agent^{*1)} | (parts) | 2 | - |
| | Polyethyleneglycol | (parts) | 4 | - |
| | Ethyleneglycol | (parts) | - | - |
| | Diethyleneglycol | (parts) | - | - |
| | Di(butoxyethoxyethyl)adipate | (parts) | 15 | 15 |
| | Vinyl chloride resin | (parts) | - | - |
| | Acryl resin | (parts) | - | - |
| Tensile strength | | (MPa) | 27.8 | 27.5 |
| Elongation | | (%) | 650 | 510 |
| 100% tensile stress | | (MPa) | 5.8 | 7.2 |
| Hardness | | (Duro-A) | 73 | 77 |
| Gasoline permeation coefficient | | (g·mm/m²·day) | 313 | 353 |
| Embrittlement temperature (°C) | | | -34 | -26 |
| Sour gasoline resistance (presence of cracks) | | | None | None |
| Solvent crack resistance | | | Good | Poor |

| | | | | |
|---|---|---|---|---|
| *1) As coupling agent, *β*-(3,4-spoxyryclohoxyl)uthyltrimethoxysilone used | | | | |

From Tables 1 and 2, a rubber cross-linked product which is obtained by cross-linking a nitrile copolymer rubber composition which comprises the nitrile copolymer rubber (A) which has a predetermined composition into which the inorganic filler (B) with an aspect ratio of 30 to 2,000, the coupling agent (C), and the specific glycol compound (D) are included in predetermined ratios (including "hydrogenated nitrile copolymer rubber composition") is excellent in normal physical properties, small in gasoline permeation coefficient, low in embrittlement temperature, excellent in sour gasoline resistance and solvent crack resistance, and can be particularly suitably used for hose applications as a result (Examples 1 to 11).

As opposed to this, if the specific glycol compound (D) is not contained, the solvent crack resistance becomes inferior as a result (Comparative Example 1), while if the content of the specific glycol compound (D) is too great, the tensile strength and gasoline permeation resistance become inferior and the embrittlement temperature becomes higher as a result (Comparative Example 2).

Further, if not containing the silane coupling agent (C), the gasoline permeation resistance becomes inferior and the embrittlement temperature becomes higher as a result (Comparative Example 3), while if the amount of the silane coupling agent (C) is too great, the tensile strength, gasoline permeation resistance, and solvent crack resistance become inferior as a result (Comparative Example 4).

If neither of the specific glycol compound (D) and silane coupling agent (C) are contained, the gasoline permeation resistance is inferior and the embrittlement temperature becomes higher as a result (Comparative Example 5).

Furthermore, if not containing the inorganic filler (B) and if using an inorganic filler with an aspect ratio of less than 30, the tensile strength, gasoline permeation resistance, and sour gasoline resistance become inferior as a result (Comparative Example 6 to 7).

Further, if using hydrogenated nitrile copolymer rubber, when neither of the specific glycol compound (D) and silane coupling agent (C) are contained, the gasoline permeation resistance and solvent crack resistance become inferior as a result (comparative Example 8).

## Claims

1. A nitrile copolymer rubber composition for hose use containing a nitrile copolymer rubber (A) which has α,β-ethylenically unsaturated nitrile monomer units 20 to 80 wt%, an inorganic filler (B) with an aspect ratio of 30 to 2,000, a coupling agent (C), and a glycol compound (D), wherein
a ratio of said coupling agent (C) is 0.05 to 15 parts by weight and a ratio of said glycol compound (D) is 0.05 to 15 parts by weight with respect to 100 parts by weight of said nitrile copolymer rubber (A).

2. The nitrile copolymer rubber composition for hose use as set forth in claim 1, wherein said glycol compound (D) is expressed by the following general formula (1).
HO-(CH₂CH₂O)ₙ-H ··· (1)
(wherein the general formula (1), n is 1 to 3000.)

3. The nitrile copolymer rubber composition for hose use as set forth in claim 2, wherein said glycol compound (D) is at least one type of compound which is selected from ethyleneglycol, diethyleneglycol, and polyethyleneglycol which has 8 carbon atoms or more carbon atoms.

4. The nitrile copolymer rubber composition for hose use as set forth in any one of claims 1 to 3, wherein said nitrile copolymer rubber (A) further has cationic monomer units and/or monomer units able to form cations, and a ratio of content said cationic monomer units and/or monomer units able to form cations in said nitrile copolymer rubber (A) is 0.1 to 30 wt%.

5. The nitrile copolymer rubber composition as set forth in any one of claims 1 to 4, wherein the composition further contains a plasticizer.

6. The nitrile copolymer rubber composition for hose use as set forth in any one of claims 1 to 5, wherein said nitrile copolymer rubber (A) is hydrogenated nitrile copolymer rubber wherein at least part of the carbon-carbon unsaturated bond parts is hydrogenated.

7. The nitrile copolymer rubber composition for hose use as set forth in any one of claims 1 to 6, wherein the composition further contains 10 to 150 parts by weight of vinyl chloride resin and/or acryl resin with respect to 100 parts by weight of said nitrile copolymer rubber (A).

8. A cross-linkable nitrile copolymer rubber composition for hose use containing the nitrile copolymer rubber composition for hose use as set forth in any one of claims 1 to 7 and a cross-linking agent.

9. A rubber cross-linked product for hose use obtained by cross-linking the cross-linkable nitrile copolymer rubber composition for hose use as set forth in claim 8.

10. A laminate for hose use comprised of two or more layers wherein at least one layer of which is comprised of the rubber cross-linked product for hose use as set forth in claim 9.

11. A hose obtained by shaping the cross-linkable nitrile copolymer rubber composition for hose use as set forth in claim 8 into a tube shape, inserting a mandrel, and cross-linking the obtained shaped article.

12. A hose obtained by shaping a laminate of two or more layers including a layer comprised of the cross-linkable nitrile copolymer rubber composition for hose use as set forth in claim 8 into a tube shape, inserting a mandrel, and cross-linking the obtained shaped article.

## Patentansprüche

1. Nitrilcopolymerkautschukzusammensetzung zur Verwendung in Schläuchen, enthaltend einen Nitrilcopolymerkautschuk (A), der 20 bis 80 Gew.-% α,β-ethylenisch ungesättigte Nitrilmonomereinheiten enthält, einen anorganischen Füllstoff (B) mit einem Aspektverhältnis von 30 bis 2.000, ein Kupplungsmittel (C) sowie eine Glycolverbindung (D), wobei
das Verhältnis des Kupplungsmittels (C) 0,05 bis 15 Gewichtsteile und das Verhältnis der Glycolverbindung (D) 0,05 bis 15 Gewichtsteile, bezüglich 100 Gewichtsteilen des Nitrilcopolymerkautschuks (A), beträgt.

2. Nitrilcopolymerkautschukzusammensetzung zur Verwendung in Schläuchen gemäß Anspruch 1, wobei die Glycolverbindung (D) durch die folgende allgemeine Formel (1) ausgedrückt wird
HO-(CH₂CH₂O)ₙ-H ··· (1)
(worin in der allgemeinen Formel (1) n 1 bis 3.000 ist).

3. Nitrilcopolymerkautschukzusammensetzung zur Verwendung in Schläuchen gemäß Anspruch 2, wobei die Glycolverbindung (D) wenigstens ein Verbindungstyp ist, der ausgewählt ist aus Ethylenglycol, Diethylenglycol und Polyethylenglycol mit 8 Kohlenstoffatomen oder mehr Kohlenstoffatomen.

4. Nitrilcopolymerkautschukzusammensetzung zur Verwendung in Schläuchen gemäß einem der Ansprüche 1 bis 3, wobei der Nitrilcopolymerkautschuk (A) des Weiteren kationische Monomereinheiten und/oder Monomereinheiten, die Kationen bilden können, aufweist, und das Verhältnis des Gehalts an den kationischen Monomereinheiten und/oder Monomereinheiten, die Kationen bilden können, im Nitrilcopolymerkautschuk (A) 0,1 bis 30 Gew.-% beträgt.

5. Nitrilcopolymerkautschukzusammensetzung gemäß einem der Ansprüche 1 bis 4, wobei die Zusammensetzung des Weiteren einen Weichmacher enthält.

6. Nitrilcopolymerkautschukzusammensetzung zur Verwendung in Schläuchen gemäß einem der Ansprüche 1 bis 5, wobei der Nitrilcopolymerkautschuk (A) ein hydrierter Nitrilcopolymerkautschuk ist, wobei wenigstens ein Teil der ungesättigten Kohlenstoff-Kohlenstoff-Bindungsteile hydriert ist.

7. Nitrilcopolymerkautschukzusammensetzung zur Verwendung in Schläuchen gemäß einem der Ansprüche 1 bis 6, wobei die Zusammensetzung des Weiteren 10 bis 150 Gewichtsteile Vinylchloridharz und/oder Acrylharz bezüglich 100 Gewichtsteilen des Nitrilcopolymerkautschuks (A) enthält.

8. Vernetzbare Nitrilcopolymerkautschukzusammensetzung zur Verwendung in Schläuchen, enthaltend die Nitrilcopolymerkautschukzusammensetzung zur Verwendung in Schläuchen gemäß einem der Ansprüche 1 bis 7 sowie ein Vernetzungsmittel.

9. Vernetztes Kautschukprodukt zur Verwendung in Schläuchen, erhalten durch Vernetzen der vernetzbaren Nitrilcopolymerkautschukzusammensetzung zur Verwendung in Schläuchen gemäß Anspruch 8.

10. Laminat zur Verwendung in Schläuchen, bestehend aus zwei oder mehr Schichten, wobei wenigstens eine Schicht desselben aus dem vernetzten Kautschukprodukt zur Verwendung in Schläuchen gemäß Anspruch 9 besteht.

11. Schlauch, erhalten durch Formen der vernetzbaren Nitrilcopolymerkautschukzusammensetzung zur Verwendung in Schläuchen gemäß Anspruch 8, zu einer Röhrenform, Einsetzen eines Dorns und Vernetzen des erhaltenen Formgegenstands.

12. Schlauch, erhalten durch Formen eines Laminats aus zwei oder mehr Schichten, umfassend eine Schicht, bestehend aus der vernetzbaren Nitrilcopolymerkautschukzusammensetzung zur Verwendung in Schläuchen gemäß Anspruch 8, zu einer Röhrenform, Einführen eines Dorns und Vernetzen des erhaltenen Formgegenstands.

## Revendications

1. Composition de caoutchouc copolymère de nitrile pour une utilisation comme tuyau contenant un caoutchouc copolymère de nitrile (A) qui a des motifs monomères nitrile α,β-éthyléniquement insaturés à 20 à 80 % en poids, une charge inorganique (B) avec un rapport de côté de 30 à 2 000, un agent de couplage (C), et un composé glycol (D), dans laquelle
un rapport dudit agent de couplage (C) est de 0,05 à 15 parties en poids et un rapport dudit composé glycol (D) est de 0,05 à 15 parties en poids rapportées à 100 parties en poids dudit caoutchouc copolymère de nitrile (A).

2. Composition de caoutchouc copolymère de nitrile pour une utilisation comme tuyau selon la revendication 1, dans laquelle ledit composé glycol (D) est exprimé par la formule générale (1) suivante :
HO-(CH₂CH₂O)ₙ-H ··· (1)
(dans la formule générale (1), n vaut 1 à 3 000).

3. Composition de caoutchouc copolymère de nitrile pour une utilisation comme tuyau selon la revendication 2, dans laquelle ledit composé glycol (D) est au moins un type de composé qui est choisi parmi l'éthylèneglycol, le diéthylèneglycol, et le poly(éthylèneglycol) qui comporte 8 atomes de carbone ou plus.

4. Composition de caoutchouc copolymère de nitrile pour une utilisation comme tuyau selon l'une quelconque des revendications 1 à 3, dans laquelle ledit caoutchouc copolymère de nitrile (A) comporte en outre des motifs monomères cationiques et/ou des motifs monomères aptes à former des cations, et un rapport de teneur desdits motifs monomères cationiques et/ou motifs monomères aptes à former des cations dans ledit caoutchouc copolymère de nitrile (A) est de 0,1 à 30 % en poids.

5. Composition de caoutchouc copolymère de nitrile selon l'une quelconque des revendications 1 à 4, dans laquelle la composition contient en outre un plastifiant.

6. Composition de caoutchouc copolymère de nitrile pour une utilisation comme tuyau selon l'une quelconque des revendications 1 à 5, dans laquelle ledit caoutchouc copolymère de nitrile (A) est un caoutchouc copolymère de nitrile hydrogéné dans laquelle au moins une partie des parties à liaison carbone-carbone insaturée est hydrogénée.

7. Composition de caoutchouc copolymère de nitrile pour une utilisation comme tuyau selon l'une quelconque des revendications 1 à 6, dans laquelle la composition contient en outre 10 à 150 parties en poids de résine de chlorure de vinyle et/ou de résine d'acryle rapportées à 100 parties en poids dudit caoutchouc copolymère de nitrile (A).

8. Composition de caoutchouc copolymère de nitrile réticulable pour une utilisation comme tuyau contenant la composition de caoutchouc copolymère de nitrile pour une utilisation comme tuyau selon l'une quelconque des revendications 1 à 7 et un agent de réticulation.

9. Produit réticulé de caoutchouc pour une utilisation comme tuyau obtenu en réticulant la composition de caoutchouc copolymère de nitrile réticulable pour une utilisation comme tuyau selon la revendication 8.

10. Stratifié pour une utilisation comme tuyau composé de deux couches ou plus, dans lequel au moins une couche est composée du produit réticulé de caoutchouc pour une utilisation comme tuyau selon la revendication 9.

11. Tuyau obtenu en conformant la composition de caoutchouc copolymère de nitrile réticulable pour une utilisation comme tuyau selon la revendication 8 en une forme de tube, en insérant un mandrin et en réticulant l'article conformé obtenu.

12. Tuyau obtenu en conformant un stratifié de deux couches ou plus incluant une couche composée de la composition de caoutchouc copolymère de nitrile réticulable pour une utilisation comme tuyau selon la revendication 8 en une forme de tube, en insérant un mandrin et en réticulant l'article conformé obtenu.
